# EUROPEAN PATENT APPLICATION

(11) **EP 2 448 257 A2**
(43) Date of publication of application: **02.05.2012**
(21) Application number: 11164703.8
(22) Date of filing: 04.05.2011
(51) Int. Cl.: H04N 5/76, H04N 21/433, H04N 21/431, H04N 21/426

(54) **Recording and reproduction apparatus using a multi-screen having a plurality of display regions**

(30) Priority: 28.10.2010 JP 2010242473
(71) Applicant: Kabushiki Kaisha Toshiba, Tokyo 105-8001 (JP)
(72) Inventor: Yoneda, Naoto, Tokyo 105-8001 (JP)
(74) Representative: Henkel, Breuer & Partner

(57) **Abstract**

According to one embodiment, a reproduction apparatus includes a recorder (108, 110, 151, 152), a reproducer (108, 110, 112, 113), and a reproduction controller (110). The recorder is configured to record a plurality of programs. The reproducer is configured to reproduce the plurality of programs on a plurality of display regions. The reproduction controller is configured to change, according to selection of a first program reproduced on a first display region of the plurality of display regions, a current reproduction time position of the first program displayed on the first display region and to reproduce the first program.

## Description

Embodiments described herein relate generally to a reproduction apparatus and reproduction method.

In recent years, television broadcast receivers, which receive digital television broadcast signals, and can record and reproduce programs based on the received digital television broadcast signals have prevailed. For example, such a television broadcast receiver can record a program based on a digital television broadcast signal using an HDD or DVD. Also, the television broadcast receiver can acquire service data from a digital television broadcast signal, and can display a program list based on this service data.

Furthermore, in recent years, multi-channel broadcast receivers, each including a plurality of tuners, have appeared. For example, such a multi-channel broadcast receiver can record and reproduce a plurality of programs corresponding to a plurality of channels received by the plurality of tuners. For example, the multi-channel broadcast receiver can simultaneously display a plurality of programs using a plurality of display regions in one screen.

As described above, the multi-channel broadcast receiver can simultaneously display a plurality of programs using the plurality of display regions in one screen. However, the multi-channel broadcast receiver does not accept reproduction control of one of the plurality of programs in such a multi-program simultaneous display mode. That is, it is inconvenient for the user since he or she is allowed to rewind or fast-forward one reproduced program after he or she switches the multi-program simultaneous display mode to a single-program display mode.

A general architecture that implements the various features of the embodiments will now be described with reference to the drawings. The drawings and the associated descriptions are provided to illustrate the embodiments and not to limit the scope of the invention.
FIG. 1 is a block diagram showing an example of the arrangement of a digital television broadcast receiver (reproduction apparatus) according to the first and second embodiments;
FIG. 2 is a flowchart showing an example of reproduction control according to the first and second embodiments;
FIG. 3 is a flowchart showing an example of reproduction control according to the first and second embodiments;
FIG. 4 is a flowchart showing an example of reproduction control according to the first and second embodiments;
FIG. 5 is a view showing an example of a multi-screen according to the first embodiment;
FIG. 6 is a view showing an example of the multi-screen according to the first embodiment;
FIG. 7 is a view showing an example of the multi-screen according to the first embodiment;
FIG. 8 is a view showing an example of the multi-screen according to the first embodiment;
FIG. 9 is a view showing an example of the multi-screen according to the first embodiment;
FIG. 10 is a view showing an example of the multi-screen according to the first embodiment; and
FIG. 11 is a view showing an example of a program guide screen (multi-screen) according to the second embodiment.

Various embodiments will be described hereinafter with reference to the accompanying drawings.

In general, according to one embodiment, a reproduction apparatus includes a recorder, a reproducer, and a reproduction controller. The recorder is configured to record a plurality of programs. The reproducer is configured to reproduce the plurality of programs on a plurality of display regions. The reproduction controller is configured to change, according to selection of a first program reproduced on a first display region of the plurality of display regions, a current reproduction time position of the first program displayed on the first display region and to reproduce the first program.

The first and second embodiments will be described hereinafter with reference to the drawings.

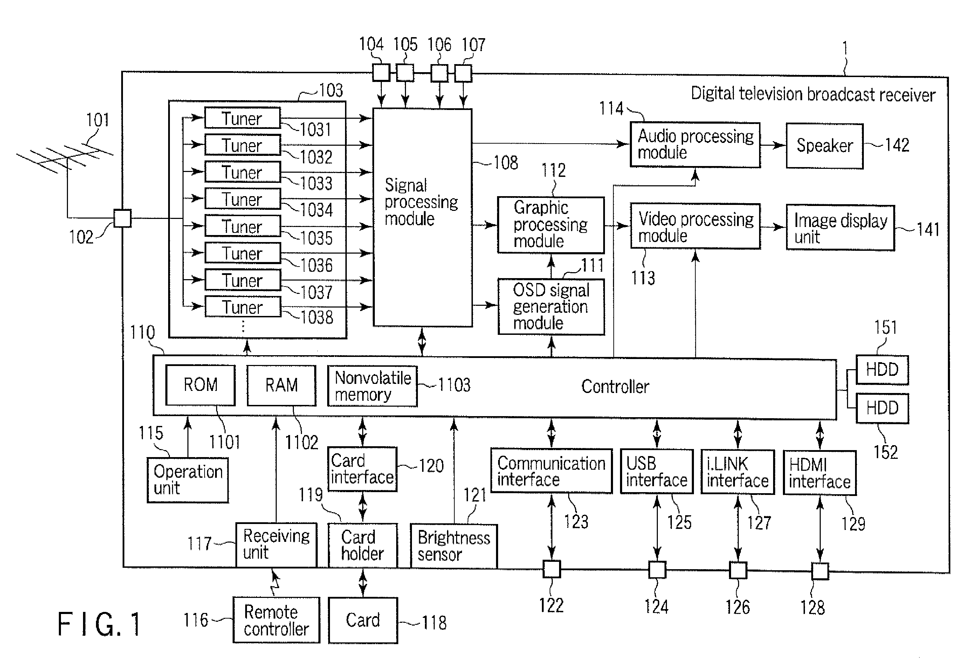

FIG. 1 is a block diagram showing an example of the arrangement of a digital television broadcast receiver (reproduction apparatus) common to the first and second embodiments. The first and second embodiment will explain reproduction control by the digital television broadcast receiver including a video display unit. Note that the video display unit is not an indispensable component. For example, the reproduction control to be described below can also be implemented by various recorders obtained by excluding the video display unit from the digital television broadcast receiver. Various recorders include, for example, an HDD recorder.

As shown in FIG. 1, a digital television broadcast receiver 1 includes an antenna 101, input terminal 102, tuner unit 103, external input terminals 104 to 107, signal processing module 108, controller 110, OSD signal generation module 111, graphic processing module 112, video processing module 113, audio processing module 114, operation unit 115, receiving unit 117, card holder 119, card interface 120, brightness sensor 121, LAN terminal 122, communication interface 123, USB terminal 124, USB interface 125, i.LINK terminal 126, i.LINK interface 127, HDMI terminal 128, HDMI interface 129, video display unit 141, loudspeaker 142, and HDDs 151 and 152.

Furthermore, the tuner unit 103 includes terrestrial digital television broadcast tuners 1031 to 1038 and also a DBS digital television broadcast tuner. The terrestrial digital television broadcast tuners 1031 to 1038 can receive and display a terrestrial digital television broadcast program table corresponding to terrestrial digital television broadcasting. Also, the DBS digital television broadcast tuner can receive and display a program table corresponding to direct satellite digital television broadcasting.

A case will be explained below wherein the digital television broadcast receiver 1 includes the video display unit 141 and loudspeaker 142, as shown in FIG. 1. However, the digital television broadcast receiver 1 is not limited to such a specific arrangement. For example, the digital television broadcast receiver 1 may have an arrangement which does not include the video display unit 141 and loudspeaker 142. That is, the digital television broadcast receiver 1 may have an arrangement which connects the video display unit 141 and loudspeaker 142 via, for example, an HDMI connection unit.

Also, a case will be explained below wherein the digital television broadcast receiver 1 includes the HDDs 151 and 152, as shown in FIG. 1. However, the digital television broadcast receiver 1 is not limited to such a specific arrangement. For example, the digital television broadcast receiver 1 may have an arrangement which does not include the HDDs 151 and 152. That is, the digital television broadcast receiver 1 may have an arrangement which connects an external storage device (for example, an HDD) via a connection unit such as the USB terminal and USB interface 125.

Furthermore, this embodiment will explain a case in which the digital television broadcast receiver 1 includes the plurality of tuners, as shown in FIG. 1. However, the digital television broadcast receiver 1 is not limited to such a specific arrangement. For example, the digital television broadcast receiver 1 may have an arrangement which does not include a plurality of tuners. In this case, for example, the digital television broadcast receiver 1 may have an arrangement which receives Internet Protocol (IP) broadcasting via the LAN terminal 122, and reproduces and records programs corresponding to a plurality of channels of the IP broadcasting.

Details of the digital television broadcast receiver 1 will be described below.

A terrestrial digital television broadcast signal received by the terrestrial digital broadcast receiving antenna 101 is supplied to the tuners 1031 to 1038 via the input terminal 102, and terrestrial digital television broadcast signal processors of the tuners 1031 to 1038 tune digital television broadcast signals of desired channels. Then, a plurality of digital television broadcast signals tuned by the tuners 1031 to 1038 are supplied to an orthogonal frequency division multiplexing (OFDM) demodulation module to be demodulated into digital video and audio signals, which are then output to the signal processing module 108.

In this case, the signal processing module 108 selectively applies predetermined digital signal processing to the digital video and audio signals supplied from the OFDM demodulation module, and outputs the processed signals to the graphic processing module 112 and audio processing module 114.

To the signal processing module 108, for example, the four input terminals 104 to 107 are connected. These input terminals 104 to 107 respectively allow to input analog video and audio signals from an external apparatus of the digital television broadcast receiver 1.

Then, the signal processing module 108 selectively converts the analog video and audio signals supplied from the input terminals 104 to 107 into digital video and audio signals, applies predetermined digital signal processing to these digital video and audio signals, and then outputs these signals to the graphic processing module 112 and audio processing module 114.

Of these modules, the graphic processing module 112 has a function of superimposing an on-screen display (OSD) signal generated by the OSD signal generation module 111 on each digital video signal supplied from the signal processing module 108, and outputting that digital video signal. The graphic processing module 112 can selectively output an output video signal of the signal processing module 108 and an output OSD signal of the OSD signal generation module 111, or combines and outputs these outputs to respectively configure halves of a screen.

Each digital video signal output from the graphic processing module 112 is supplied to the video processing module 113. The video signal processed by the video processing module 113 is supplied to the video display unit 141. The video display unit 141 displays an image based on the video signal.

The audio processing module 114 converts an input digital audio signal into an analog audio signal having a format that can be reproduced by the loudspeaker 142, and outputs the analog audio signal to the loudspeaker 142, thereby reproducing an audio.

The controller 110 systematically controls all operations of this digital television broadcast receiver 1, which include various reception operations described above. The controller 110 includes a central processing unit (CPU). The controller 110 receives operation data (various instructions) from the operation unit 115 or operation data (various instructions) which is output from a remote controller 116 and is received via the receiving unit 117, and controls the respective modules so as to reflect the operation contents.

The controller 110 includes a read-only memory (ROM) 1101 which stores control programs to be executed by the CPU, a random access memory (RAM) 1102 which provides work areas to the CPU, and a nonvolatile memory 1103 which stores, for example, various kinds of setting data and control data.

The controller 110 is connected to the card holder 119, to which a memory card 118 is attached, via the card interface 120. Thus, the controller 110 can exchange data with the memory card 118 attached to the card holder 119 via the card interface 120.

The controller 110 is connected to the LAN terminal 122 via the communication interface 123. Thus, the controller 110 can exchange data with a LANcompatible device connected to the LAN terminal 122 via the communication interface 123. In this case, the controller 110 has a Dynamic Host Configuration Protocol (DHCP) server function, and controls the LANcompatible device connected to the LAN terminal 122 by assigning an Internet Protocol (IP) address to that device.

Furthermore, the controller 110 is connected to the HDMI terminal 128 via the HDMI interface 129. Thus, the controller 110 can exchange data with an HDMI-compatible device connected to the HDMI terminal 128 via the HDMI interface 129.

Also, the controller 110 is connected to the USB terminal 124 via the USB interface 125. Thus, the controller 110 can exchange data with a USB-compatible device connected to the USB terminal 124 via the USB interface 125.

Moreover, the controller 110 is connected to the i.LINK terminal 126 via the i.LINK interface 127. Thus, the controller 110 can exchange data with an i.LINK-compatible device connected to the i.LINK terminal 126 via the i.LINK interface 127.

The controller 110 is configured to receive a brightness detection signal from the brightness sensor 121. Thus, the controller 110 can attain, for example, brightness control of an image and backlight based on the brightness detection signal.

The controller 110 can also control a recording operation required to record a broadcast signal, which is tuned and descrambled by the tuner unit 103, in the HDD 151 or 152 or an external storage device (for example, an HDD) connected via the LAN terminal 122 or USB terminal 124. Note that since the tuner unit 103 includes the plurality of tuners, as described above, a plurality of programs of a plurality of channels can be recorded and displayed at the same time. For example, the digital television broadcast receiver 1 can record all programs for one week (for example, designated time zones for one week) of a plurality of channels (a plurality of designated channels) to have highdefinition image quality. Such a recording mode will be referred to as a simultaneous multi-recording mode. Note that the digital television broadcast receiver 1 includes the plurality of tuners 1031 to 1038 corresponding to the plurality of channels, so as to attain the aforementioned simultaneous multi-recording mode, and also includes a plurality of card slots used to receive a plurality of descramble cards corresponding to the plurality of tuners 1031 to 1038, so as to support scrambled broadcasting.

### (First Embodiment)

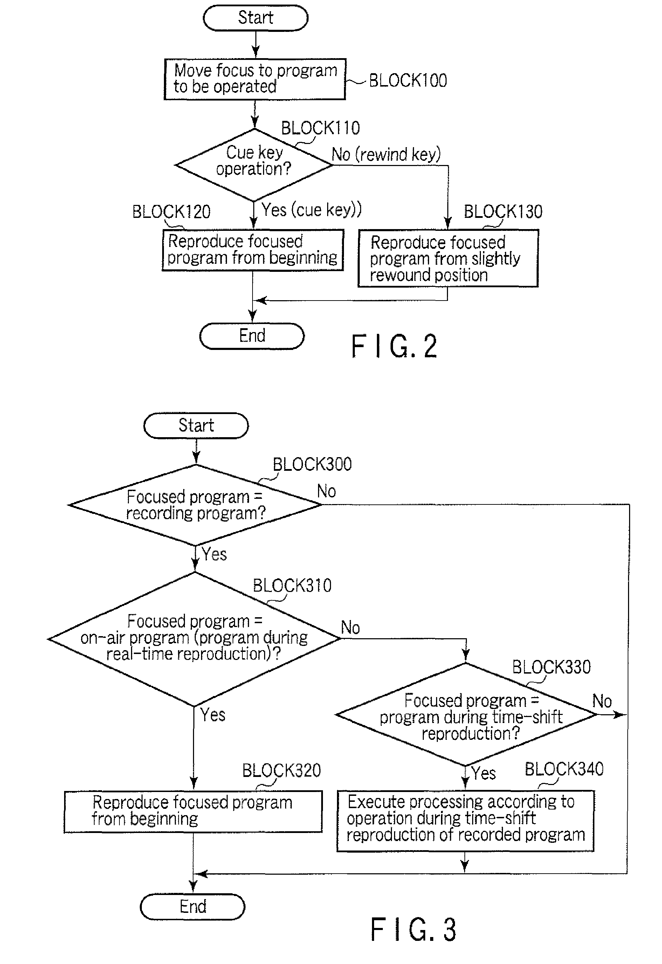

Reproduction control by the digital television broadcast receiver 1 will be described below with reference to FIG. 2, 3, 4, 5, 6, 7, 8, 9, and 10. More specifically, simultaneous control of time-shift reproduction operations of one or more programs of a plurality of programs and real-time reproduction operations of the remaining one or more programs of the plurality of programs by the digital television broadcast receiver 1 will be described below. Note that the reproduction control by the digital television broadcast receiver 1 includes a case in which all the plurality of programs are reproduced in a real-time reproduction mode, and a case in which all the plurality of programs are reproduced in a time-shift reproduction mode. Also, to output (display) an on-air program intact is called a real-time reproduction mode (operation), and to record a program and to output (display) the recorded program without outputting an on-air program intact is called a time-shift reproduction mode (operation).

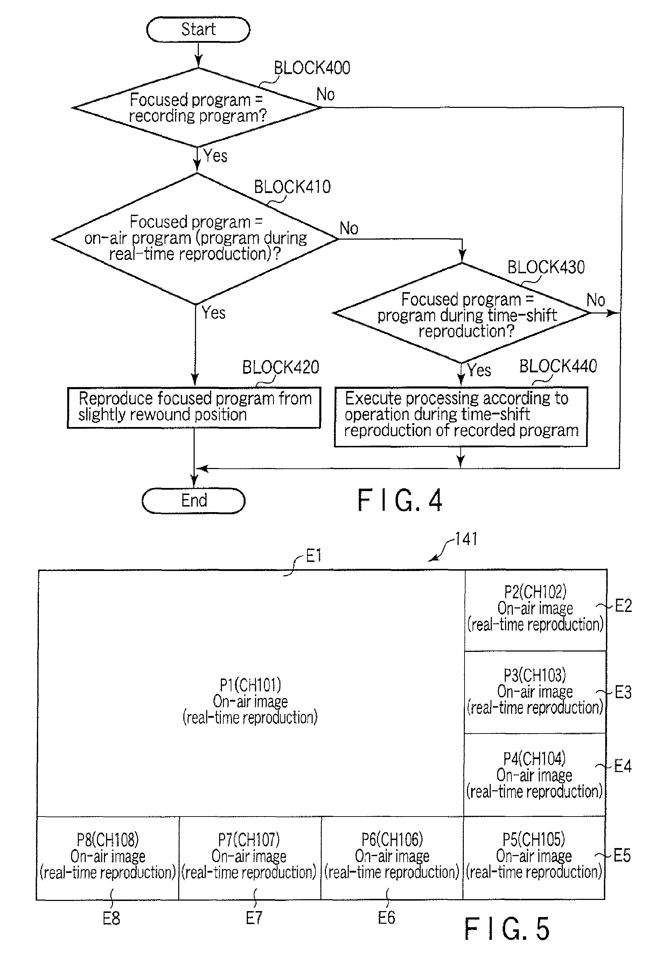

FIGS. 2, 3, and 4 are flowcharts showing an example of the reproduction control. FIGS. 5, 6, 7, 8, 9, and 10 are views showing examples of a screen (multi-screen) used to simultaneously display (simultaneously reproduce) a plurality of programs corresponding to a plurality of channels by the video display unit 141. Note that FIGS. 5, 6, 7, 8, 9, and 10 show examples of the screen (multi-screen) which simultaneously displays (simultaneously reproduces) eight programs corresponding to eight channels on eight display regions. However, a multi-program simultaneous display mode is not limited to such an eight-program simultaneous display mode. The multi-program simultaneous display mode can be a simultaneous display mode of two or more programs.

For example, a state in which the multi-screen is displayed on the video display unit 141 (a state in which eight programs corresponding to eight channels are simultaneously displayed), as shown in FIG. 5, is assumed. That is, the signal processing module 108 simultaneously reproduces eight programs corresponding to eight channels on eight display regions (in the real-time reproduction mode), and the video display unit 141 then simultaneously displays the eight programs corresponding to the eight channels on the eight display regions. That is, the signal processing module 108 reproduces images of programs P1 to P8 of channels CH101 to CH108 (in the real-time reproduction mode). Then, the video display unit 141 displays an on-air image of program P1 on a display region E1 having a first size (large size), and displays on-air images of programs P2 to P8 on display regions E2 to E8 having a second size (small size) smaller than the first size.

The user can designate (select) channel CH102 from the eight channels CH101 to CH108. For example, the user can designate channel CH102 by selecting display region E2 from the eight display regions E1 to E8 of the video display unit 141 via the operation unit 115 or remote controller 116 (BLOCK 100 in FIG. 2).

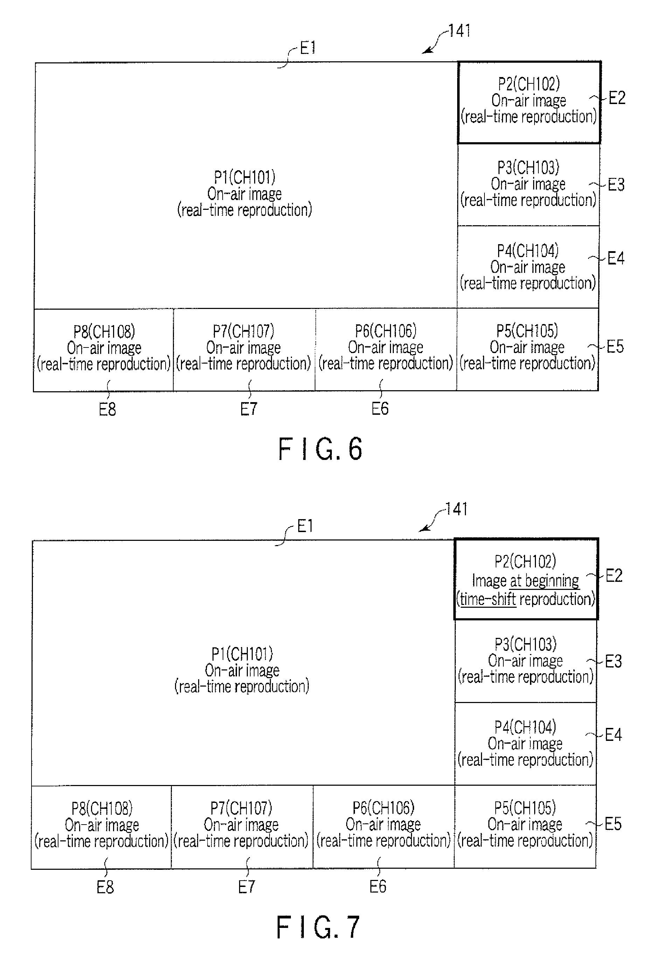

In response to selection of display region E2 (designation of channel CH102), the controller 110 controls to display, for example, display region E2 using a first display frame, and to display remaining display regions E1 and E3 to E8 using a second display frame different from the first display frame. That is, in response to selection of display region E2 (designation of channel CH102), the controller 110 controls to display region E2 and remaining display regions E1 and E3 to E8 to be identifiable from each other. In response to this control, the video display unit 141 displays display region E2 and remaining display regions E1 and E3 to E8 to be identifiable from each other (see FIG. 6). Note that display region E2 shown in FIG. 6 will also be referred to as a focused region, or program P2 will also be referred to as a focused program hereinafter.

An example of the reproduction control will be described below with reference to FIG. 2. In response to selection of display region E2 (designation of channel CH102), the controller 110 executes the reproduction control and display control of program P2 of channel CH102. For example, when the user inputs a predetermined operation (for example, a cue key operation or rewind key operation) via the operation unit 115 or remote controller 116 (YES in BLOCK 110 in FIG. 2; or NO in BLOCK 110 in FIG. 2), the controller 110 changes a current reproduction time position of program P2, and reproduces program P2 (BLOCK 120 or 130 in FIG. 2). In other words, the controller 110 switches the reproduction mode of program P2 from the real-time reproduction mode to the time-shift reproduction mode.

For example, in response to the predetermined operation (for example, the cue key operation or enter key operation), the controller 110 changes a currently airing first reproduction time position of program P2 to a second reproduction time position as a start position of program P2, and reproduces program P2 from the start position (BLOCK 120 in FIG. 2) (see FIG. 7). That is, the controller 110 switches the reproduction mode of program P2 from the real-time reproduction mode to the time-shift reproduction mode, and reproduces program P2 from its start position.

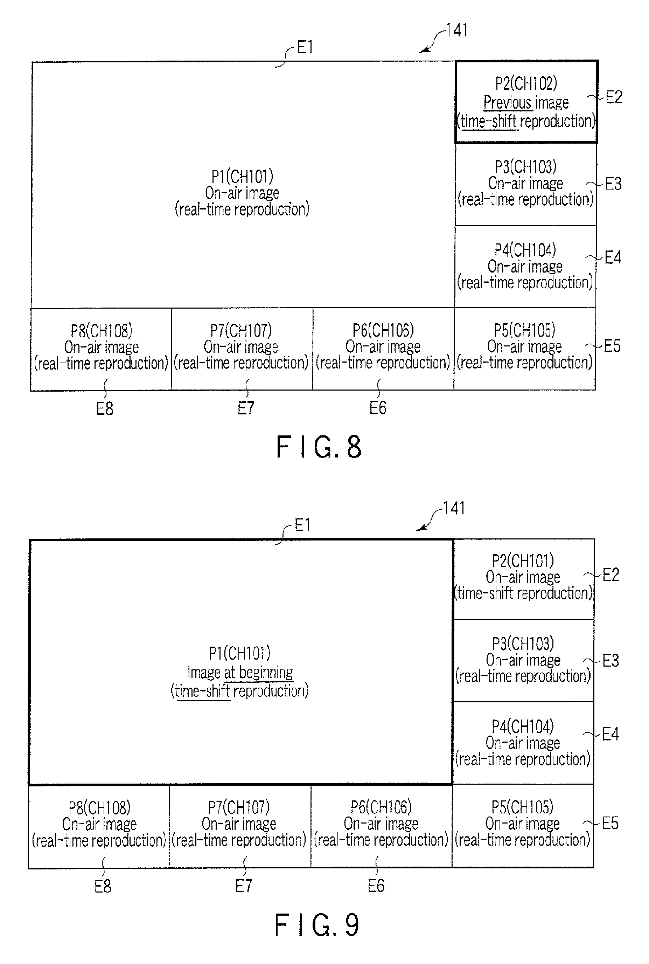

Alternatively, in response to the predetermined operation (for example, the rewind key operation or enter key operation), the controller 110 changes a currently airing first reproduction time position of program P2 to a second reproduction time position before the first reproduction time position (the second reproduction time position going back a predetermined time period from the first reproduction time position), and reproduces program P2 from the second reproduction time position (BLOCK 130 in FIG. 2) (see FIG. 8). That is, the controller 110 switches the reproduction mode of program P2 from the real-time reproduction mode to the time-shift reproduction mode, and reproduces program P2 from the second reproduction time position.

An example of the reproduction control for reproducing program P2 from its start position will be described in detail below with reference to FIG. 3. For example, when the on-air programs P1 to P8 corresponding to channels CH101 to CH108 shown in FIG. 5 are recorded, that is, when program P2 (focused program) is recorded (YES in BLOCK 300 in FIG. 3), and program P2 is on the air (during real-time reproduction) (YES in BLOCK 310 in FIG. 3), the controller 110 changes the currently airing first reproduction time position of program P2 to the second reproduction time position as the start position of program P2 in response to the predetermined operation, and reproduces program P2 from its start position (BLOCK 320 in FIG. 3) (see FIG. 7). That is, the controller 110 switches the reproduction mode of program P2 from the real-time reproduction mode to the time-shift reproduction mode, and reproduces program P2 from its start position. At this time, the controller 110 continues to reproduce currently airing images of remaining programs P1 and P3 to P8 (see FIG. 7). That is, the controller 110 continues to perform the real-time reproduction operations of remaining programs P1 and P3 to P8.

Alternatively, in response to a predetermined operation, the controller 110 can reproduce all the programs (programs P1 to P8) from their start positions. That is, in response to the predetermined operation, the controller 110 can switch the real-time reproduction operations of all the programs (programs P1 to P8) to the time-shift reproduction operations, and can reproduce all the programs from their start positions.

Alternatively, in response to a predetermined operation, the controller 110 can replace the display positions of programs P2 and P1, can reproduce program P2 from its start position, and can continue to reproduce currently airing images of remaining programs P1 and P3 to P8. In this case, the video display unit 141 displays an image of program P2 on display region E1 of the first size (large size), and displays that of program P1 on display region E2 of the second size (small size) (see FIG. 9).

Note that when program P2 is not an on-air program (during real-time reproduction) (NO in BLOCK 310 in FIG. 3) but it is a program during time-shift reproduction (YES in BLOCK 330 in FIG. 3), the controller 110 controls the time-shift reproduction operation of program P2 in response to a predetermined reproduction control operation (BLOCK 340 in FIG. 3).

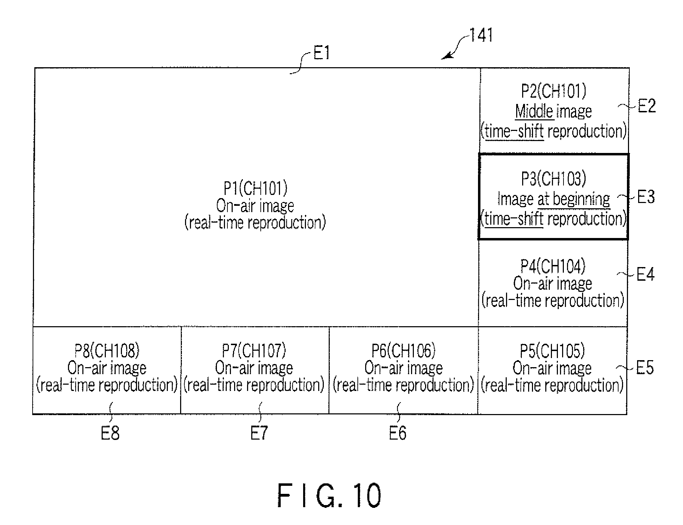

Note that in a state in which program P2 of programs P1 to P8 is reproduced from its start position, and currently airing images of remaining programs P1 and P3 to P8 are reproduced, when the user further selects display region E3 from the eight display regions E1 to E8 (to designate channel CH103) via the operation unit 115 or remote controller 116, and inputs a predetermined operation (for example, the cue key operation or enter key operation) via the operation unit 115 or remote controller 116, the controller 110 changes a currently airing third reproduction time position of program P3 to a fourth reproduction time position as a start position of program P3, and reproduces program P3 from its start position (see FIG. 10). That is, the controller 110 reproduces programs P2 and P3 in the time-shift reproduction mode, and reproduces programs P1 and P4 to P8 in the real-time reproduction mode. In this way, the digital television broadcast receiver can control the individual reproduction operations of the eight programs.

With the above control, when program P2, the user wanted to view, has been broadcast to the middle while the eight programs are simultaneously displayed by the video display unit 141, he or she can view program P2 from the beginning by a simple operation. For example, when the user switches a single-program display mode to a multi-program simultaneous display mode via the operation unit 115 or remote controller 116, he or she often finds that program P2, he or she wanted to view, has already been broadcast to the middle. In such case, it is very convenient for the user since he or she can view program P2 from the beginning by a simple operation.

An example of the reproduction control for reproducing program P2 by going back a predetermined time period will be described in more detail below with reference to FIG. 4. For example, when the on-air programs P1 to P8 corresponding to channels CH101 to CH108 shown in FIG. 5 are recorded, that is, when program P2 (focused program) is recorded (YES in BLOCK 400 in FIG. 4), and program P2 is on the air (during real-time reproduction) (YES in BLOCK 410 in FIG. 4), the controller 110 changes the currently airing first reproduction time position of program P2 to the second reproduction time position before the first reproduction time position (the second reproduction time position going back a predetermined time period from the first reproduction time position), and reproduces program P2 from the second reproduction time position (BLOCK 420 in FIG. 4) (see FIG. 8). That is, the controller 110 switches the reproduction mode of program P2 from the real-time reproduction mode to the time-shift reproduction mode, and reproduces program P2 from the second reproduction time position. At this time, the controller 110 continues to reproduce currently airing images of remaining programs P1 and P3 to P8 (see FIG. 8). That is, the controller 110 continues to perform the real-time reproduction operations of remaining programs P1 and P3 to P8.

For example, in response to a single predetermined operation, the controller 110 reproduces program P2 from a position going back 5 sec from the currently airing first reproduction time position. In response to double predetermined operations, the controller 110 reproduces program P2 from a position going back 10 sec from the currently airing first reproduction time position. At this time, the controller 110 continues to reproduce currently airing images of remaining programs P1 and P3 to P8.

Alternatively, in response to a single predetermined operation, the controller 110 can also reproduce all the programs (programs P1 to P8) by going back a predetermined time period. That is, in response to the single predetermined operation, the controller 110 can switch the real-time reproduction operations of all the programs (programs P1 to P8) to the time-shift reproduction operations, and can reproduce all the programs by going back a predetermined time period.

Alternatively, in response to a predetermined operation, the controller 110 can reproduce program P2 by going back a predetermined time period while replacing the display positions of programs P2 and P1, and can continue to reproduce currently airing images of remaining programs P1 and P3 to P8. In this case, the video display unit 141 displays an image of program P2 on display region E1 of the first size (large size), and displays an image of program P1 on display region E2 of the second size (small size).

Note that when program P2 is not an on-air program (during real-time reproduction) (NO in BLOCK 410 in FIG. 4) but it is a program during time-shift reproduction (YES in BLOCK 430 in FIG. 4), the controller 110 controls the time-shift reproduction operation of program P2 in response to a predetermined reproduction control operation (BLOCK 440 in FIG. 4).

Note that in a state in which program P2 of programs P1 to P8 is reproduced by going back a predetermined time period, and currently airing images of remaining programs P1 and P3 to P8 are reproduced, when the user further selects display region E3 from the eight display regions E1 to E8 (to designate channel CH103) via the operation unit 115 or remote controller 116, and inputs a predetermined operation (for example, the rewind key operation or enter key operation) via the operation unit 115 or remote controller 116, the controller 110 changes a currently airing third reproduction time position of program P3 to a fourth reproduction time position before the third reproduction time position, and reproduces program P3 from the fourth reproduction time position. That is, the controller 110 performs the real-time reproduction operations of programs P1 and P4 to P8 while performing the time-shift reproduction operations of programs P2 and P3. In this manner, the digital television broadcast receiver 1 can control the individual reproduction operations of the eight programs.

As described above, in a state in which the video display unit 141 simultaneously displays the eight programs, when the user has missed out a predetermined scene of program P2, he or she can view program P2 by going back a predetermined time period by a simple operation. For example, when the user switches the single-program display mode to the multi-program simultaneous display mode via the operation unit 115 or remote controller 116, he or she often finds that he or she has missed out a predetermined scene of program P2. In this case, it is very convenient for the user since he or she can view program P2 by going back a predetermined time period by a simple operation.

As described above, in a state in which the video display unit 141 simultaneously displays the eight programs, the user can reproduce, for example, program P2 from its start position or from a position going back a predetermined time period by a simple operation (one-touch operation) via the operation unit 115 or remote controller 116, while viewing on-air images of programs P1 to P8. Furthermore, while keeping the state in which program P2 is reproduced from its start position or a position going back a predetermined time period, the user can reproduce, for example, program P3 from the beginning or from a position going back a predetermined time period by a simple operation (one-touch operation) via the operation unit 115 or remote controller 116.

### (Second Embodiment)

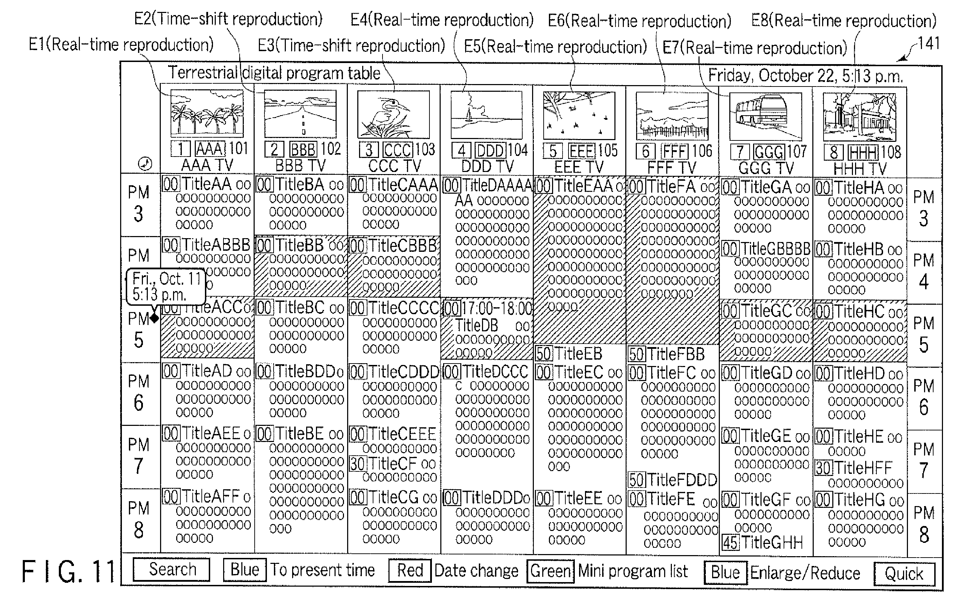

Reproduction control by the digital television broadcast receiver 1 will be described below with reference to FIG. 11. The digital television broadcast receiver 1 receives a terrestrial digital television broadcast signal via the antenna 101, and the signal processing module can detect service data from the received signal. The service data includes, for example, items of program data of respective channels (for example, channels CH101 to CH108) for eight days. For example, the program data corresponding to one program includes data of a title and program contents of that program.

The OSD signal generation module 111 generates an OSD signal required to display a program list table based on the items of program data of channels CH101 to CH108. For example, the program list table is configured by a time axis and channel axis, and includes items of program data corresponding to respective programs provided by the eight channels. The graphic processing module 112 composites previous or currently airing reproduced images of the eight programs of channels CH101 to CH108 with the program list table, and outputs display data required to display a program list table with reproduced images shown in FIG. 11. In response to this, the video display unit 141 displays the program list table with reproduced images shown in FIG. 11.

For example, the uppermost row of the program list table with reproduced images includes data such as previous or currently airing reproduced images of the eight programs of channels CH101 to CH108, channel numbers of channels CH101 to CH108, channel logos of channels CH101 to CH108, and channel names of channels CH101 to CH108. Furthermore, at the upper right position and a position along the time axis of the program list table with reproduced images, current date & time data (for example, Friday, October 22, 5:13 p.m.) is allocated. That is, the program list table with reproduced images includes items of time data indicating current reproduction time positions of respective programs provided by channels CH101 to CH108.

The program data included in the program list table with reproduced images is displayed to allow the user to identify whether that program data is or is not during reproduction. For example, when an image of a program with a title ACC is displayed on a display region E1, program data of the title ACC is displayed in a first display format. Likewise, when an image of a program with a title BB is displayed on a display region E2, program data of the title BB is also displayed in the first display format. Likewise, when an image of a program with a title CBBB is displayed on a display region E3, program data of the title CBBB is also displayed in the first display format. Likewise, when an image of a program with a title DB is displayed on a display region E4, program data of the title DB is also displayed in the first display format. Likewise, when an image of a program with a title EAA is displayed on a display region E5, program data of the title EAA is also displayed in the first display format. Likewise, when an image of a program with a title EA is displayed on a display region E6, program data of the title FA is also displayed in the first display format. Likewise, when an image of a program with a title GC is displayed on a display region E7, program data of the title GC is also displayed in the first display format. Likewise, when an image of a program with a title HC is displayed on a display region E8, program data of the title HC is also displayed in the first display format. Items of program data (for example, a title AA and title ABBB) other than those described above are displayed in a second display format.

An example of transition from the multi-screen shown in FIGS. 5, 6, 7, 8, 9, and 10 to the program list table with reproduced images shown in FIG. 11 will be described below. For example, at the time of Friday, October 22, 4:30 p.m., in a state in which the multi-screen is displayed on the video display unit 141 (a state in which the eight programs corresponding to the eight channels are simultaneously displayed), as shown in FIG. 5, when the user selects display region E2, and further inputs a predetermined operation (for example, a cue key operation or rewind key operation) via the operation unit 115 or remote controller 116, the controller 110 changes a currently airing first reproduction time position of program P2 to a second reproduction time position as a start position of program P2, and reproduces program P2 from its start position (see FIG. 7).

After that, at the time of Friday, October 22, 4:45 p.m., in a state in which the multi-screen is displayed on the video display unit 141 (a state in which the eight programs corresponding to the eight channels are simultaneously displayed), as shown in FIG. 7, when the user selects display region E3 and further inputs a predetermined operation (for example, the cue key operation or rewind key operation) via the operation unit 115 or remote controller 116, the controller 110 changes a currently airing third reproduction time position of program P3 to a fourth reproduction time position as a start position of program P3, and reproduces program P3 from its start position (see FIG. 10).

After that, for example, at the time of Friday, October 22, 5:13 p.m., in a state in which the multi-screen is displayed on the video display unit 141 (a state in which the eight programs corresponding to the eight channels are simultaneously displayed), as shown in FIG. 10, when the user designates to display the program list table via the operation unit 115 or remote controller 116, the controller 110 switches the multi-screen shown in FIG. 10 to the program list table with reproduced images shown in FIG. 11. At this time, as shown in FIG. 11, the program list table with reproduced images indicates that the previous title BB of channel CH102 is during reproduction, and display region E2 displays an image of the previous title BB of channel CH102. Also, the program list table indicates that the previous title CBBB of channel CH103 is during reproduction, and display region E3 displays an image of the previous title CBBB of channel CH103. Furthermore, the program list table with reproduced images indicates that the currently airing title ACC of channel CH101 is during reproduction, and display region E1 displays a currently airing image of the currently airing title ACC of channel CH101. Likewise, the program list table indicates that the currently airing titles of channels CH104 to CH108 are during reproduction, and display regions E4 to E8 display currently airing images of the currently airing titles of channels CH104 to CH108.

Note that the first embodiment has explained the case in which the digital television broadcast receiver 1 controls the individual reproduction operations of the respective programs while displaying the multi-screen shown in FIGS. 5, 6, 7, 8, 9, and 10 (the case in which the real-time reproduction mode is changed to the time-shift reproduction mode). The second embodiment has explained the case in which the digital television broadcast receiver 1 switches, for example, the multi-screen shown in FIG. 10 to the program list table with reproduced images shown in FIG. 11. Furthermore, the digital television broadcast receiver 1 can control the individual reproduction operations of the respective program (to change the real-time reproduction mode to the time-shift reproduction mode) while displaying the program list table with reproduced images shown in FIG. 11, and can switch the program list table with reproduced images shown in FIG. 11 to the multi-screen shown in FIGS. 5, 6, 7, 8, 9, and 10.

According to at least one of the aforementioned embodiments, a reproduction apparatus and reproduction method, which can implement reproduction control of programs during multi-program simultaneous reproduction can be provided.

The various modules of the embodiments described herein can be implemented as software applications, hardware and/or software modules, or components on one or more computers, such as servers. While the various modules are illustrated separately, they may share some or all of the same underlying logic or code.

## Claims

1. A reproduction apparatus **characterized by** comprising:
a recorder (108, 110, 151, 152) configured to record a plurality of programs;
a reproducer (108, 110, 112, 113) configured to reproduce the plurality of programs on a plurality of display regions; and
a reproduction controller (110) configured to change, according to selection of a first program reproduced on a first display region of the plurality of display regions, a current reproduction time position of the first program displayed on the first display region and to reproduce the first program.

2. The apparatus of Claim 1, **characterized in that** the reproduction controller is configured to change, according to selection of the first display region, a currently airing first reproduction time position of the first program to a second reproduction time position before the first reproduction time position, and to reproduce the first program from the second reproduction time position.

3. The apparatus of Claim 1, **characterized in that** the reproduction controller is configured to change, according to selection of the first display region, a currently airing first reproduction time position of the first program to a second reproduction time position as a start position of the first program, and to reproduce the first program from the start position.

4. The apparatus of Claims 1, 2, or 3, **characterized in that** the reproduction controller is configured to change, according to selection of a second program reproduced on a second display region of the plurality of display regions, a current reproduction time position of the second program displayed on the second display region, and to reproduce the second program.

5. The apparatus of Claim 4, **characterized in that** the reproduction controller is configured to reproduce, according to a rewind operation, the first program by going back to a currently airing third reproduction time position, and to also reproduce the second program by going back to a currently airing fourth reproduction time position.

6. The apparatus of Claim 5, **characterized by** further comprising:
a display (141) configured to display a program list table which is configured by a time axis and a channel axis, and includes items of program data corresponding to respective programs provided by a plurality of channels,
**characterized in that** the display is configured to display the program list table including the items of program data which identifiably display programs during reproduction and programs not during reproduction of the programs provided by the plurality of channels.

7. The apparatus of Claim 6, **characterized in that** the display is configured to display the program list table including the plurality of display regions.

8. A reproduction method **characterized by** comprising:
recording a plurality of programs;
reproducing the plurality of programs on a plurality of display regions; and
changing, according to selection of a first program reproduced on a first display region of the plurality of display regions, a current reproduction time position of the first program displayed on the first display region and reproducing the first program.
